# EUROPÄISCHE PATENTSCHRIFT

(11) **EP 0 396 701 B1**
(45) Veröffentlichungstag und Bekanntmachung des Hinweises auf die Patenterteilung: **20.01.1993**
(21) Anmeldenummer: 89912394.7
(22) Anmeldetag: 27.10.1989
(51) Int. Cl.: F16G 13/06

(54) **Rollenkette**
ROLLER CHAIN
CHAINE A ROULEAUX

(30) Priorität: 28.10.1988 DE 3836738; 15.12.1988 DE 3842140
(43) Veröffentlichungstag der Anmeldung: 14.11.1990
(73) Patentinhaber: ROHLOFF, Bernhard, D-34125 Kassel (DE)
(72) Erfinder: ROHLOFF, Bernhard, D-34125 Kassel (DE)
(74) Vertreter: Freiherr von Schorlemer, Reinfried, Dipl.-Phys.
(86) Internationale Anmeldenummer: DE8900693
(87) Internationale Veröffentlichungsnummer: WO9004728

(56) Entgegenhaltungen:
- EP-A- 0 233 640
- DE-A- 3 434 516
- DE-B- 2 829 424
- US-A- 2 568 649

## Beschreibung

Die Erfindung betrifft eine Rollenkette speziell für Fahrräder mit Kettenschaltung. Die Kette besteht aus abwechselnd angeordneten, gelenkig miteinander verbundenen Innen- und Außengliedern, wobei die Außenglieder aus jeweils einem, mittels zwei Bolzen miteinander verbundenen Außenlaschenpaar und die Innenglieder jeweils aus einem, zwischen den Außenlaschen angeordneten und auf den Bolzen drehbar gelagerten Innenlaschenpaar bestehen. An den Innenlaschen sind je zwei, je eine Rolle tragende, die Bolzen umfassende, rohrförmige Elemente (Lagerkragen) angebracht.

Ketten dieser Art sind vielfältig bekannt. So zeigt z.B. D.J. Mackintosh in US-A-2,568,649 eine Rollenbkette mit einem aus der Innenlasche gezogenen Lagerkragen. Sedis DE-B-28 29 424 zeigt enbenfalls verschiedene Versionen mit den aus der Innenlasche gezogenen Lagerkragen. Diese Kragen sind in ihrem Außen- und Innendurchmesser zylinderförmig und auf den Bolzenmittelpunkt bezogen. Um eine günstige Gelenkpressung zwischen Bolzen und Kragen zu erhalten, sind enge Toleranzen vorgeschrieben, die bei den auf dem Markt befindlichen Hochleistungsketten einem Laufspiel zwischen Bolzen und Kragen von maximal etwa 0,05 - 0,1 mm entsprechen. Dadurch können die Bolzen bei fertig zusammengesetzter und fabrikneuer Kette um höchstens ca. ein Grad in den Lagerkragen verschwenken, so daß die Kette in seitlicher Richtung nur sehr wenig flexibel ist.

Eine Vergrößerung der Beweglichkeit des Bolzens wäre nur über ein größeres Laufspiel möglich, welches sich aber aufgrund der Differenz zwischen den Radien der Bolzen und Lagerkragen ungünstig auf die Gelenkpressung auswirken würde. Weiterhin gestattet eine Vergrößerung des Laufspiels eine größere Verdrehbarkeit der der Glieder um die Längsachse der Kette, was sich sehr negativ beim Schaltvorgang bemerkbar macht.

Bei den bekannten Rollenketten führt weiterhin das aus fertigungs- und betriebstechnischen Gründen erforderliche Laufspiel zwischen Bolzen und Lagerkragen sowie zwischen Lagerkragen und Rolle bei hoher Lastübertragung wegen der hohen Gelenkpressungen zu stärkeren elastischen Verformungen der Gelenkbauteile, was sich in demjenigen Bereich des Zahneingriffs, in dem die Last auf die Kettenzahnräder übertragen wird, hauptsächlich in einer elastischen Verlängerung der Kette in der Größenordnung von drei bis fünf Hundertstel Millimeter pro Kettenglied bemerkbar macht, wobei sich diese Verlängerung hauptsächlich zwischen benachbarten Innengliedern auswirkt.

Dies ist neben der elastischen Verlängerung der Laschen selbst ein wesentlicher Grund dafür, daß die Kettenglieder auf den Zahnflanken der belasteten Zähne der Kettenräder hochrutschen, und somit eine wesentliche Ursache für den Verschleiß der Zahnflanken. Da sich bei herkömmlichen Ketten auch der Gelenkverschleiß hauptsächlich in einer Verlängerung der Kette zwischen benachbarten Innengliedern bemerkbar macht, addieren sich hier diese negativen Faktoren.

Aufgabe der Erfindung ist es daher, bei den oben beschriebenen Nachteilen Abhilfe zu schaffen. Insbesondere soll durch die Erfindung eine Rollenkette vorgeschlagen werden, die in seitlicher Richtung ausreichend flexibel ist, eine im wesentlichen konstante Teilung besitzt und weniger empfindlich gegenüber Verschleiß und elastischer Dehnung ist.

Zur Lösung dieser Aufgabe dienen die kennzeichnenden Merkmale des Anspruchs 1.

Die Erfindung macht von der überraschenden Erkenntnis Gebrauch, daß die ovalen bzw. langlochförmigen Innenlöcher bei der beanspruchten Kettenkonstruktion keinen wesentlichen Einfluß auf die Kettenteilung haben. Dadurch kann die seitliche Flexibilität im Vergleich zu bekannten Ketten wesentlich Vergrößert werden.

Die ovalen bzw. langlochartigen Innenlöcher ermöglichen in überraschend einfacher Weise auch eine solche Gestaltung der Lagerkragen, daß die Gelenkpressung im Gegensatz zur Anwendung zylindrischer Lagerkragen relativ klein und damit der Verschleiß der Kette insgesamt vergleichsweise gering ist. Dazu sind die Bolzen der erfindungsgemäßen Rollenkette z.B. in Lastrichtung vorzugsweise um ca. 120 Grad von den Lagerkragen formschlüssig umfaßt, wodurch sich niedrige Werte für die Gelenkpressung und daraus resultierend ein geringerer Verschleiß des Gelenks sowie eine kleinere elastische Verformung von Bolzen und Lagerkragen ergeben. Zur Laschenmitte kann sich der Bolzen jedoch frei bewegen bzw. seitlich ausschwenken. Dadurch wird eine große seitliche Kettenflexibilität erhalten, die unabhängig von dem Laufspiel Bolzen/Lagerkragen ist. Der Verdrehwinkel um die Kettenlängsachse der Kettenglieder zueinander ist dagegen durch die Höhe der Langlöcher begrenzt und unabhängig vom Längsspiel der Bolzen im Lagerkragen.

Die ovalen oder langlochförmigen Innenlöcher können in zweierlei Arten im Lagerkragen angeordnet werden. Aus fertigungstechnischen Gründen empfiehlt sich eine symmetrische Anordnung, bei der die Mittelpunkte der Außen- und Innenkonturen der Lagerkragen übereinstimmen. Bei gestreckter Kette sind die Bolzenmittelpunkte daher deutlich von den Mittelpunkten der Lagerkragen nach außen verschoben. Um dennoch eine gleichmäßige Rollenteilung, d.h. einen konstanten Abstand der Mittelpunkte der Rollen bei gestreckter Kette zu erhalten, ist hierbei die Teilung der Außenlaschen, also der Abstand der Bolzenmittelpunkte in den Außenlaschen, entsprechend verkürzt.

Die Innenlöcher der Lagerkragen können jedoch auch so gestaltet sein, daß sie asymmetrisch, d.h. zur Laschenmitte hin versetzt in den Lagerkragen angeordnet sind und die Bolzen genau in den Mittelpunkten der Lagerkragen gehalten werden. In diesem Fall ist eine Korrektur der Teilung nicht nötig, da sie bereits durch die Form der Lagerkragen festgelegt ist.

Weitere vorteilhafte Merkmale der Erfindung ergeben sich aus den Unteransprüchen.

Im folgenden wird die erfindungsgemäße Rollenkette in Verbindung mit der Zeichnung an Ausfürungsbeispielen näher erläutert. Es zeigen:
Fig. 1 eine Explosionszeichnung eines Gelenks der erfindungsgemäßen Rollenkette;
Fig. 2 die Draufsicht auf ein seitlich ausgelenktes Kettengelenk in einem Halbschnitt längs der Linie II-II der Fig. 3;
Fig. 3 mehrere Gelenke der erfindungsgemäßen Rollenkette in einem Vertikalschnitt;
Fig. 4 die Gelenke der Fig. 3 in einem Schnitt längs der Linie IV-IV der Fig. 3;
Fig. 5 ein Kettengelenk im Schnitt A-B der Fig. 6;
Fig. 6 ein einzelnes Kettengelenk im Vertikalschnitt mit symmetrischer Anordnung eines Innenlochs in einem Lagerkragen;
Fig. 7 ein einzelnes Kettengelenk im Vertikalschnitt mit asymmetrischer Anordung eines Innenlochs im Lagerkragen;
Fig. 8 einen Vertikalschnitt durch ein Innenglied einer driten Ausführungsform der erfindungsgemäßen Rollenkette im Zahneingriff mit einem Kettenzahnrad;
Fig. 9 einen Vertikalschnitt durch ein Innenglied einer dritten Ausführungsform der erfindungsgemäßem Rollenkette im Zahneingriff mit einem Kettenrad; und
Fig. 10 die Lage des Lagerkragens relativ zur Innenlasche bei der Ausführungsform nach Fig. 9.

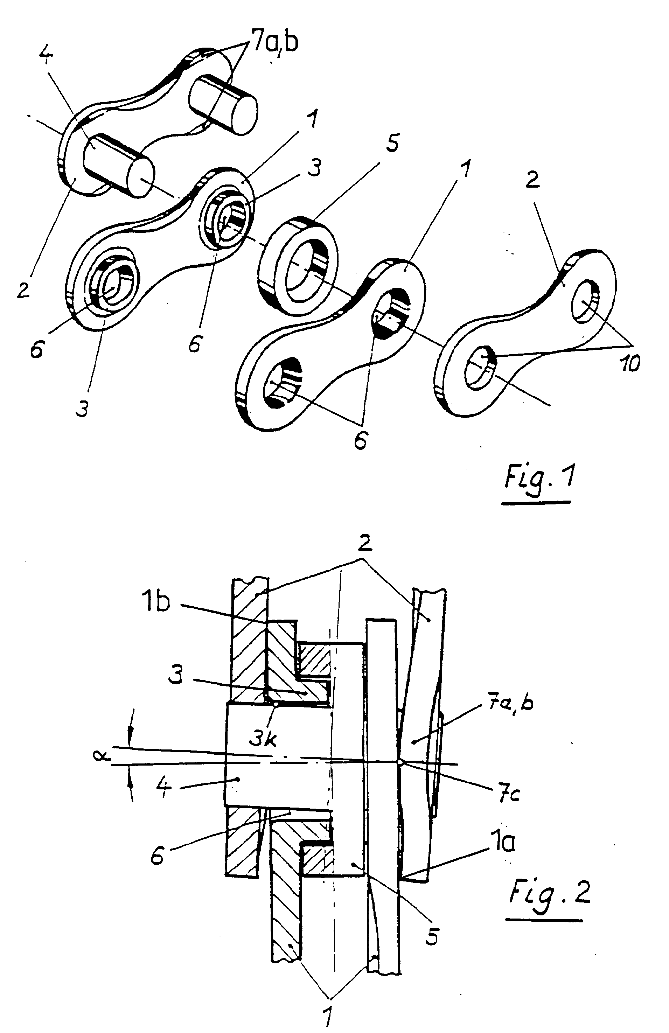

Gemäß Fig. 1 bis 4 enthält die Rollenkette wie üblich eine Vielzahl von Innen- und Außengliedern, die in Richtung der Längsachse A der Rolenkette abwechselnd hintereinander angeordnet sind. Jedes Innenglied besteht aus wenigstens zwei aufeinander ausgerichteten, symmetrisch auf beiden Seiten der Achse A angeordneten, plattenförmigen Innenlaschen 1, die auf ihren einander zugewandten Seiten mit aufeinander ausgerichteten, in Längsrichtung beabstandeten, rohrförmigen Lagerkragen 3 versehen sind, die durchgehende Innenlöcher 6 in den Innenlaschen 1 bilden. Jedes Außenglied besteht aus weningstens zwei, symmetrisch auf beiden Seiten der Achse A angeordneten, plattenförmigen Außenlaschen 2, die aufeinander ausgerichtete, in Lägsrichtung beabstandete Bolzenlöcher 10 zur Aufnahme je eines Bolzens 4 aufweisen. Im zusammengesetzten Zustand der Rollenkette liegt, wie insbesondere Fig, 4 zeigt, jeweils das eine Ende eines Innenglieds zwischen den zugeordeten Enden der beiden Außenlaschen 2 eines benachbarten Außenglieds. Die Verbindung der Außen- und Innenglieder erfolgt dabei durch je einen Bolzen 4, der die Innenlöcher 6 der gegenüberliegenden Lagerkragen 3 und die Bolzenlöcher 140 des benachbarten Außenglieds durchragt und mit den Außenlaschen 2 z.B. vernietet ist. Auf die Lagerkragen 3 sind schließlich lose drehbar gelagerte Rollen 5 aufgezogen, die die Innenlaschen 1 in einem Abstand halten, der kleiner als der Abstand zwischen jeweils zwei Außenlaschen 2 ist.

Rollenketten dieser Art sind allgemein bekannt und brauchen daher nicht näher erläutert werden (z.B. US-A-4,704,099).

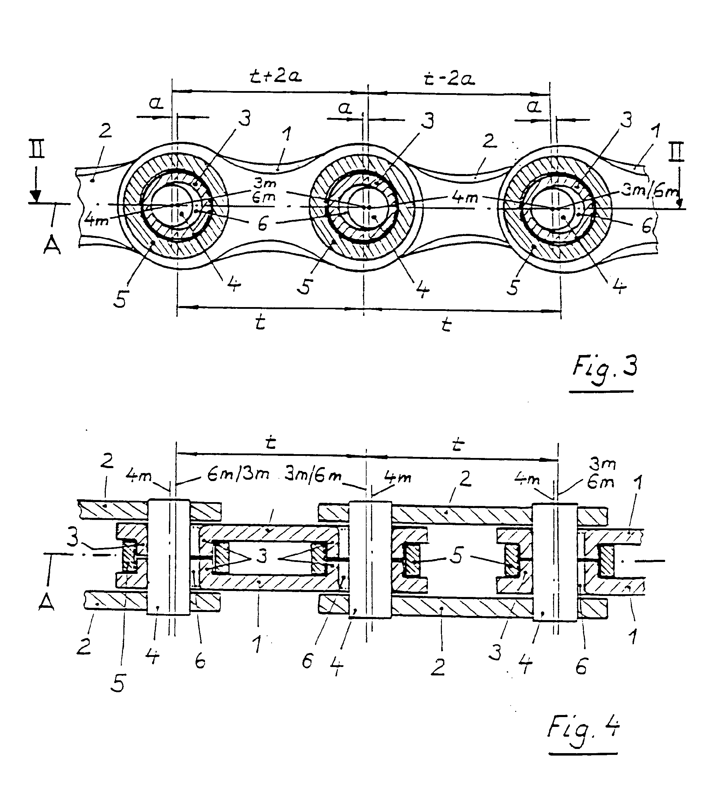

Die Innenlöcher 6 der Lagerkragen 3 weisen erfindungsgemäß einen in Längsrichtung der Kette ovalen oder langlochförmigen Querschnitt auf. Dabei ist der in Längsrichtung der Kette gemessene Durchmesser der Innenlöcher 6 um so viel größer als der Durchmesser der zylindrischen Bolzen, daß diese bei fertig montierter und fabrikneuer Rollenkette ungehindert um mehr als das durch die üblichen Toleranzen mögliche Maß, vorzugsweise mindestens um zwei Grad, um die an den Enden der Innenlöcher 6 liegenden, äußeren Lagerkanten 3k der Lagerkragen 3 (Fig. 2) schwenken können.

Der senkrecht zur Zug-bzw. Längsrichtung der Kette gemessene Durchmesser der Innenlöcher 6 ist dagegen nur um die üblichen Toleranzen oder wenig mehr größer als der Bolzendurchmesser. Bei einem üblichen Bolzendurchmesser von ca. 3,6 mm beträgt der große Durchmesser der Innenlöcher 6 z.B. 3,9 mm bis 4 mm, der kleine Durchmesser dagegen z.B. 3,7 mm bei einem Abstand der gegenüberliegenden Lagerkanten 3k der zugehörigen beiden Innenlaschen 1 von ca. 4,2 mm. Nach oben ist die Länge des großen Durchmessers durch die Wandstärke der Lagerkragen begrenzt, die wenigstens etwa 0,6 mm betragen sollte, während der kleine Durchmesser nicht wesentlich größer als oben beschrieben augebildet werden sollte, weil die Kette sonst labil gegenüber Verdrehungen um ihre Längsachse A wird. Bei anderen Bolzendurchmessern sind diese Maße entsprechend anzupassen. Im übrigen haben Versuche gezeigt, daß wesentlich größere seitliche Verschwenkbewegungen der Kettenglieder nicht erforderlich sind und keine zusätzlichen Vorteile mit sich bringen, während kleinere Verschwenkbewegungen zunehmend schlechtere Ergebnisse zur Folge haben. Daher wird der Wert von zwei Grad derzeit für am besten gehalten.

Fig. 2 zeigt ein Gelenk im seitlich ausgelenkten Zustand. Es ist zu erkennen, daß der Bolzen 4 in dem Innenloch 6 um einen Winkel α über die äußeren Lagerkanten 3k seitlich ausschwenken kann.

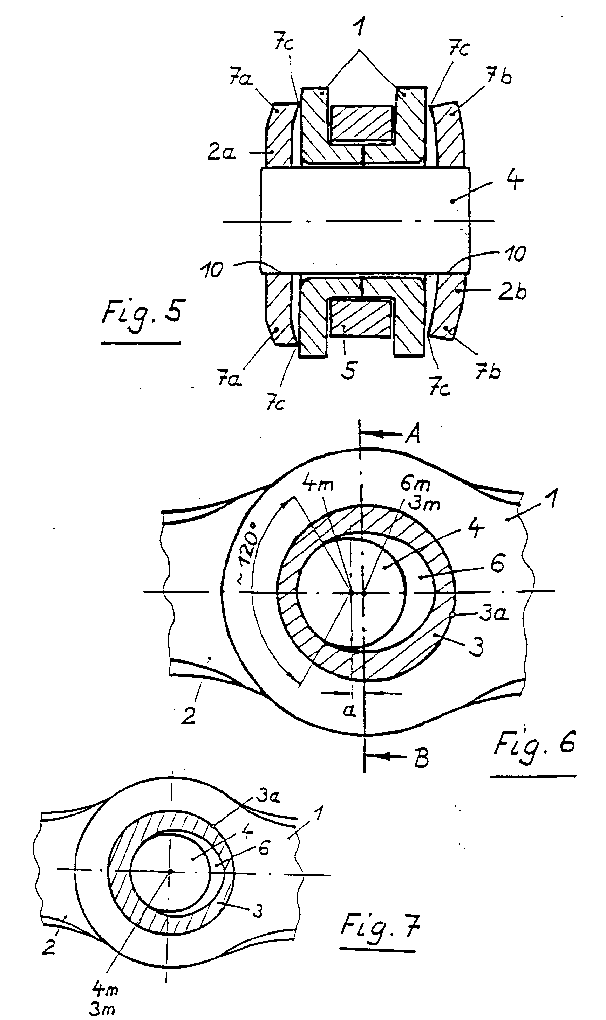

Eine noch Stärkere Verschwenkung der Innenglieder 1 gegenüber den Außengliedern 2 wird konstruktiv dadurch begrenzt, daß die Innenlaschen 1 beim Erreichen des gewünschten Maximalwinkels an die Außenlaschen anschlagen, wie bei 1a und 1b gezeigt ist. Außerdem sind die Außenlaschen 2 vorzugsweise - in Längsrichtung der Kette gesehen - an ihren oberhalb und unterhalb der Achse A und oberhalb und unterhalb der Bolzenlöcher 10 befindlichen Kanten 7a und 7b, wie insbesondere Fig. 1, 2 und 5 zeigen, mit punktförmigen, in Richtung der Mittelebene der Kette vorstehenden Anschlagnasen 7c versehen. Diese lassen zwar einerseits entsprechend Fig. 2 die gewünschte seitliche Verschwenkung der Kettenglieder zu, halten aber gleichzeitig die Innenlaschen 1 in ihrer zur Mittelebene der Kette symmetrischen Position, so daß sich die Innenglieder nicht im ganzen seitlich, d.h. parallel zu den Bolzenachsen verschieben können. Dabei können die Anschlagnasen 7c durch entsprechende Formgebung der Kanten 7a, 7b erhalten werden, indem die Außenlaschen 2 entweder mit entsprechend abgewinkelten Kanten 7a versehen werden (Fig. 5, links) oder um die längsachse der Kette gewölbt werden (kanten 7b in Fig. 5, rechts).

Fig. 3 und 4 zeigen mehrere Kettenglieder in gestrecktem Zustand. Die Mittenachsen 4m der Bolzen 4 sind deutlich von den Mittelachsen der Rollen 5 bzw. der Lagerkragen 3 um einen Betrag a verschoben, und zwar jeweils in Richtung der benachbarten Außenlaschen 2. Diese Verschiebung ergibt sich bei einer symmetrischen, mittigen Anordnung der Innenlöche 6 in den Lagerkragen 3 dadurch, daß die Mittenachsen 6m der Innenlöcher 6 und die Mittenachsen 3m der Außenkonturen der Lagerkragen 3 zusammenfallen, wobei die Wandstärken der Lagerkragen 3 an den in Kettenlängsrichtung an die Innenlöcher 6 grenzenden Bereichen im wesentlichen gleich groß sind (Fig. 6).

Die für den Betrieb wichtige Teilung t der Rollen 5, d.h. der Abstand ihrer Mittelachsen bei gestreckter Kette, wird dabei dadurch konstant gehalten, daß der Abstand der Achsen der Bolzen 4 bzw. der sie aufnehmenden Bolzenlöcher 10 der Außenlaschen 2 entsprechend einem Maß 2a reduziert, für den Abstand der Mittenachsen 3m der Außenkonturen der Lagerkragen 3 und der Mittenachsen 6m der Innenlöcher 6 dagegen der Wert t beibehalten wird. Das Maß 2a entspricht dem doppelten Maß a , um das jede Bolzenachse 4m bei gestreckter Kette aus der Mittenachse 6m der Innenlöcher 6 bzw. der Mittenachsen 3m der Außenkonturen der Lagerkragen 3 nach außen verschoben ist.

Gemäß Fig. 3 und 4 ist daher der Abstand der Bolzenachse 4m in den Außengliedern konstruktiv auf t - 2a festgelegt. Dagegen beträgt der Abstand der Bolzenachsen 4m bei gestreckter Kette, in den Innengliedern gemessen, jeweils t + 2a. Der Abstand der Mittenachsen 6m aller Rollen 5 beträgt dagegen jeweils t , so daß sich durch die Korrektur des Bolzenabstands in den Außenlaschen 2 auf den Wert t - 2a eine konstante Teilung t für die Rollen 6 ergibt.

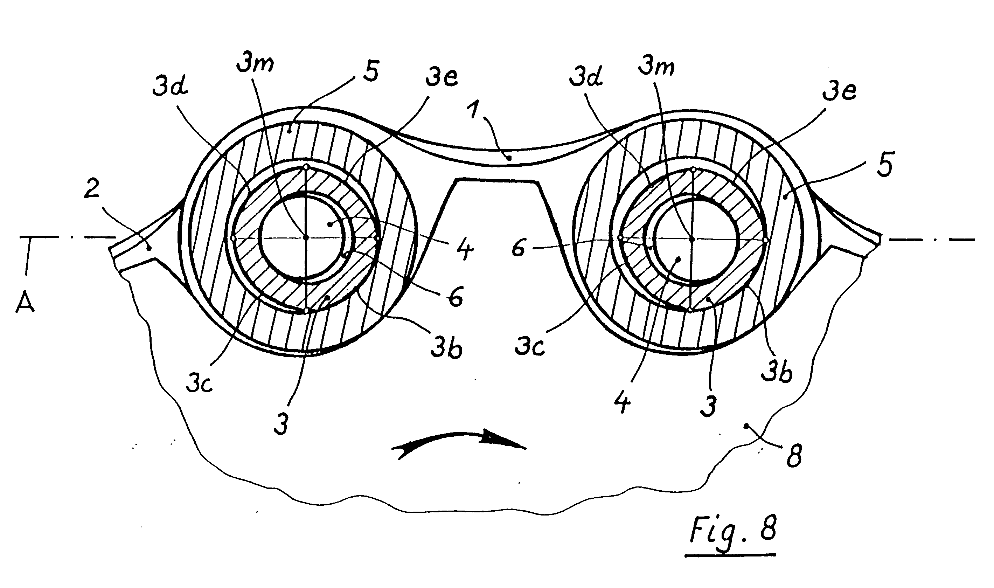

Eine derartige Korrektur zur Konstanthaltung der Rollenteilung ist nicht erforderlich, wenn gemäß einer anderen Ausführungsform der Erfindung (Fig. 7) die Innenlöcher 6 um das Maß a zur Mitte der Innenlaschen 1 hin verschoben und dadurch assymetrisch in den Lagerkragen 3 angeordnet werden, so daß bei gestreckter Kette die Mittenachsen 4m der Bolzen 4 und die Mittenachsen 3m der Außenkonturen der Lagerkragen 3 zusammenfallen. Die Rollenteilung entspricht dann wieder überall dem Maß t .

Fig. 6 zeigt den ovalen bzw. langlochförmigen Querschnitt des sich im Lagerkragen 3 befindlichen Innenlochs. Das Innenloch 6 ist vorzugsweise so gestaltet, daß es in Lastrichtung den Bolzen 4 um ca. 110 Grad bis 140 Grad formschlüssig umfaßt, um dadurch niedrige Flächenpressungen zu erhalten. Ein Wert von 120 Grad hat sich dabei als bisher bester Wert erwiesen, weil er einen guten Kompromiß zwischen einer geringen Flächenpressung und der erwünschten geringen, aber doch merklichen Verdrehbarkeit der Bolzen 4 um die Längsachse A der Kette darstellt.

Fig. 8 zeigt eine Ausführungsform, bei der im Gegensatz zu Fig. 1 bis 6 die äußere, jeweils eine Rolle 5 tragende Lagerfläche aus vier gleich großen, über je 90 Grad erstreckten Zylinderflächensegmenten 3b, 3c, 3d und 3e gebildet ist, die im Querschnitt senkrecht zu den Mittenachsen 3m eine Fläche ergeben, deren Außenkontur der eines Quadrats entspricht, dessen Seitenlinien nicht gerade, sondern nach außen konvex sind, dessen Mittelpunkt auf der Mittenachse 3m liegt und dessen die vier Ecken berührender Hüllkreis einen Radius aufweist, der etwas kleiner, vorzugsweise um etwa 0,1 mm kleiner als der Radius der konvexen Seitenlinien ist. Die Mittelachsen der Zylinderflächensegmente 3b bis 3e schneiden daher einen Kreis mit einem Radius von ca. 0,1 mm. Der Radius der konvexen Seitenlinien ist dabei vorzugsweise genau so groß wie der Radius der Innenlöcher der Rollen 5, damit sich jedes Zylinderflächensegment formschlüssig an die Innenkontur der Rollen 5 anlegen kann, wodurch eine geringe Flächenpressung erzielt wird. Weitere Einzelheiten ergeben sich aus Fig. 8, auf die hiermit ausdrücklich hingewiesen wird.

Die Lagerkragen 3 sind dabei vorzugweise so an den Innenlaschen 1 angeordnet, daß sich je Lagerkragen 3 immer zwei Zylinderflächensegmente 3b, 3c auf der einen und die beiden anderen Zylinderflächensegmente 3d, 3e auf der anderen Seite der Achse A bzw. der die Achse A und die Mittenachsen 3m enthaltenden Mittelebene befinden und diese daher genau durch die Berührungsflächen der Zylinderflächensegmente 3b, 3e bzw. 3c, 3d verläuft.

Fig. 8 zeigt den Ketteneingriff mit einem von der Kette getriebenen Kettenrad 8. Es ist zu erkennen, daß aufgrund der speziellen Formgebung der Lagerkragen 3 die Rollen 5 von den Zylinderflächensegmenten 3b, die in Kettenlaufrichtung (Pfeil), also nach vom und zum Kettenrad 8 hin gerichtet sind, über ein Viertel des Lagerkragenumfangs formschlüssig gehalten werden. Daraus resultiert in Verbindung mit der formschlüssigen Auflage der Bolzen 4 an den in Laufrichtung der Kette vom bzw. hinten liegenden, inneren Lagerflächen der Lagerkragen 3 eine wesentliche Verminderung der elastischen Verformung der Gelenkbauteile, was eine Verminderung des Verschleißes der Zahnflanken des Kettenrads 8 zur Folge hat.

Beim Eingriff der Kette mit einem antreibenden, z. B. durch die Pedale angetriebenen Kettenrad, ebenfalls in Richtung des Pfeils, stützen dagegen die hinteren und zum Kettenrad 8 gerichteten Zylinderflächensegmente 3c die Rollen 5 formschlüssig ab. In Verbindung mit der formschlüssigen Anlage der Bolzen 4 in den Innenlöchern 6 ergeben sich somit in beiden Fällen auch bei hoher Lastübertragung niedrige Werte für die Gelenkpressung und folglich im Gegensatz zu herkömmlichen Ketten mit zylinderförmigen Lagerkragen geringere elastische Dehnungen der Kette.

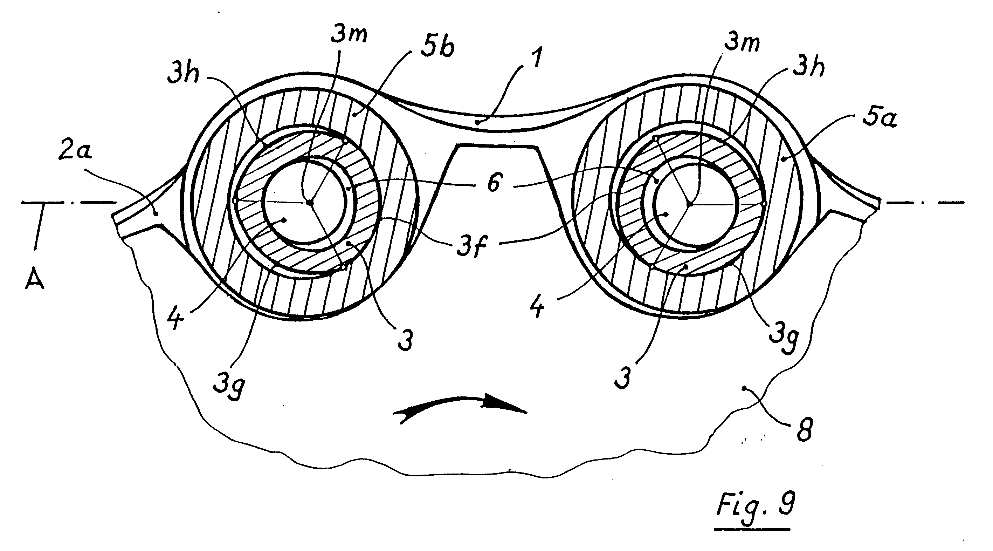

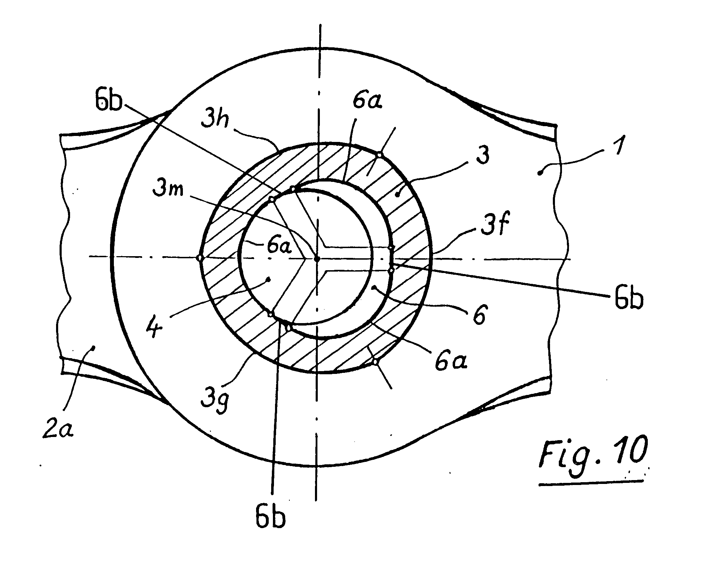

Fig. 9 und 10 zeigen schließlich die derzeit für die beste gehaltene Ausführungsform, bei der die äußeren Lagerflächen der Lagerkragen 3 im Gegensatz zu Fig. 8 aus drei gleich großen, über je 120 Grad erstreckten Zylinderflächensegmenten 3f, 3g und 3h zusammengesetzt sind. Die Zylinderflächensegmente 3f bis 3h ergeben im Querschnitt senkrecht zu den Mittenachsen 3m eine Fläche, deren Außenkontur etwa der eines gleichseitigen Dreiecks entspricht, dessen Seitenlinien nicht gerade, sondern nach außen gewölbt sind und dessen die drei Ecken berührender Hüllkreis einen Radius aufweist, der etwas kleiner, vorzugsweise um etwa 0,1 mm kleiner als der Radius der konvexen Seitenlinien ist. Die Acksen der drei Zylinderflächensegmente 3f bis 3h schneiden daher einen Kreis mit einem Radius von ca. 0,1 mm. Auch hier ist der Radius der konvexen Seitenlinien vorzugsweise genau so groß wie der Radius der Innenlöcher der Rollen 5, damit sich jedes Zylinderflächensegment formschlüssig an die Innenkontur der Rollen 5 anlegen kann, wodurch eine geringe Flächenpressung erzielt wird. Weitere Einzelheiten ergeben sich aus Fig. 9 und 10, auf die hiermit ausdrücklich hingewiesen wird.

Die Lagerkragen sind dabei vorzugsweise so an den Innenlaschen 1 angeordnet, daß jeweils ein zur Mitte der Innenlaschen 1 gerichtetes Zylinderflächensegment 3f genau von der Achse A bzw. der entsprechenden Mittelebene halbiert wird, während die beiden anderen Zylinderflächensegmente 3g und 3h auf je einer Seite der Achse A liegen und die Achse A durch ihre Berührungsebene verläuft.

Die Teilung der Außenglieder beträgt wie bei den Ausführungsbeispielen nach Fig. 1 bis 6 und 8 vorzugsweise t - 2a.

Fig. 9 zeigt wiederum den Ketteneingriff mit dem von der Kette in Pfeilrichtung getriebenen Kettenrad 8. Es ist zu erkennen, daß die vorlaufende Rolle 5a des Innenglieds 1 von demjenigen Zylinderflächensegment 3g über ein Drittel des Lagerkragenumfangs formschlüssig gehalten wird, das nach vorn in Kettenlaufrichtung und zum Kettenrad 8 gerichtet ist, während die nachlaufende Rolle 5b von dem zur Mitte der Innenlasche 1 gerichteten, symmetrisch zur Achse A liegenden Zylinderflächensegment 3f ebenfalls über ein Drittel des Lagerkragenumfangs formschlüssig abgestützt wird. Beim Eingriff mit einem in Pfeilrichtung drehenden, aber die Kette antreibende Kettenrad würde die vorlaufende Rolle 5a von dem zur Mitte der Innenlasche 1 gerichteten, symmetrisch zur Achse A liegenden Zylinderflächensegment 3f gehalten werden, während die nachlaufende Rolle 5b ihre Anlage an dem nach hinten und unten gerichteten Zylinderflächensegment 3g finden würde.

Aus fertigungstechnischen Gründen empfiehlt sich bei der Ausführungsform nach Fig. 9 und 10, auch den Innenkonturen der Innenlöcher 6 eine besondere Form zu geben. Die Innenlöcher 6 sind ebenfalls aus drei gleich großen, über etwas weniger als je 120 Grad erstreckten Zylinderflächensegmenten 6a (Fig. 10) gebildet, die jeweils durch kurze ebene oder leicht konvex nach außen gewölbte Flächenabschnitte 6b verbunden sind. Dadurch wird in einem Querschnitt senkrecht zu den Achsen 3m eine Fläche erhalten, die etwa dadurch entsteht, daß drei gleich große, über 120 Grad erstreckte Kreissegmente radial um eine Strecke von ca. 0,1 mm nach außen geschoben und dann die dadurch entstehenden Lücken zwischen den drei über 120 Grad erstreckten Kreisbogenabschnitten durch gerade oder leicht konvex nach außen gewölbte Linien verbunden werden. Der Hüllkreis an die Eckpunkte der drei Kreisbogenabschnitte ist dann etwas größer als der Radius der Kreisbogenabschnitte, wobei die Achsen der drei Zylinderflächensegmente 6a wiederung auf einem Kreis mit dem Radius von ca. 0,1 mm liegen. Der Radius der Kreisbogenabschnitte ist vorzugsweise genau so groß wie der Bolzenradius, damit sich jedes Zylinderflächensegment 6a formschüssig an die Bolzen 4 anlegen kann, wodurch eine geringe Flächenpressung erzielt wird. Im Gegensatz zu den Zylinderflächensegmenten 3f, 3g und 3h liegt allerdings die beschriebene Querschnittsfläche nicht vollständig innerhalb, sondern teilweise außerhalb des Hüllkreises.

Die Innenlöcher 6 sind dabei so im Lagerkragen 3 angeordnet, daß immer ein Kreisbogenabschnitt 6a genau zum benachbarten Außenglied 2a (Fig. 10) gerichtet ist und von der Achse A bzw. Mittelebene genau halbiert wird, so daß die Bolzen 4 in Kettenlaufrichtung über ein Drittel des Bolzenumfangs formschlüssig gehalten werden. Auf der diametral gegenüberliegenden Seite verläuft die Achse A dagegen genau durch die Mitte desjenigen ebenen Abschnitts 6b, der die beiden anderen Zylinderflächensegmente 6a verbindet, wie insbesondere aus Fig. 10 genau ersichtlich ist. Somit ergeben sich auch hier bei hoher Lastübertragung niedrige Werte für die Gelenkpressung und entsprechend geringe elastische Verformungen der Gelenkbauteile. Die Verdrehbarkeit der Kettenglieder um die Kettenlängsachse wird bei dieser Ausführung nur von den gewölbten oder gewinkelten Kanten 7a bzw. 7b der Außenlaschen 2 (Fig. 2 und 5) begrenzt.

Durch die unterschiedliche Anlage der Rollen 5a und 5b an den unterschiedlich angeordneten Zylinderflächensegmenten 3g und 3f ergibt sich hier für die im Innenglied gemessene Rollenteilung beim Zahneingriff ein etwas größerer Wert als für die im folgenden Außenglied gemessene Rollenteilung. Diese Differenz ist jedoch so klein, daß sie von der Verzahnungsgeometrie des Kettenrades aufgenommen werden kann, und kann konstruktiv über die Form der Zylinderflächensegmente 3f, 3g, 3h bestimmt werden. Bei entsprechender Auslegung dieser Differenz erhält die Kette dann erst nach einem bestimmten Gelenkverschleiß bzw. bei einer bestimmten elastischen Verformung der Gelenkbauteile eine exakte gleichmäßige Teilung. Daraus resultiert aufgrund der besseren Lastverteilung auf die Zähne des Kettenrades eine weitere Verminderung des Verschleißes der Zahnflanken, besonders bei der im Radsport üblichen Verwendung von Leichtmetall-Kettenrädern. Außerdem ergibt sich, daß eine fabrikneue Kette immer erst nach einer gewissen Längung durch Verschleiß bzw. erst in einem bei hoher Lastübertragung entstehenden, elastisch gelängten Zustand bis ca. fünf Hundertstel Millimeter pro Gelenk die optimalen Dimensionen besitzt und daher erst danach durch weiteren Verschleiß zunehmend schlechtere Eigenschaften erhält.

Die Erfindung ist nicht auf die beschriebenen Ausführungsbeispiele beschränkt, die sich auf vielfache Weise abwandeln lassen. Insbesondere versteht sich, daß die den verschiedenen Ausführungsbeispielen zugeordneten Einzelmerkmale auch in anderen als den dargestellten Kombinationen angewendet werden können und die Kettenteilung auch teils durch eine Verkürzung der Bolzenteilung in den Außengliedern und teils durch einen Versatz der Innenlöcher 6 in den Lagerkragen 3 konstant gehalten werden kann.

## Patentansprüche

1. Rollenkette für Fahrräder mit Kettenräderwechselgetriebe (Kettenschaltung) mit abwechselnd angeordneten, gelenkig miteinander verbundenen Innen- und Außengliedern wobei die Außenglieder aus jeweils einem, mittels zwei Bolzen (4) miteinander verbundenen Außenlaschenpaar (2) und die Innenglieder aus jeweils einem, zwischen den Außenlaschen (2) angeordneten und auf den Bolzen (4) drehbar gelagerten Innenlaschenpaar (1) bestehen, wobei an den Innenlaschen (1) je zwei, je eine Rolle (5) tragende Lagerkragen (3) mit die Bolzen (4) umfassenden Innenlöchern (6) angebracht sind, dadurch gekennzeichnet, daß die Innenlöcher (6) einen in Kettenlängsrichtung ovalen oder langlochförmigen Querschnitt aufweisen und daß die Rollenteilung der Innen- und Außenglieder im gestreckten Zustand der Kette durch entsprechenden Versatz der Bolzenlöcher (10) in den Außenlaschen (2) und/oder der Innenlöcher (6) in den Lagerkragen (3) im wesentlichen auf denselben Wert eingestellt ist (Fig. 3, 8, 9).

2. Rollenkette nach Anspruch 1, dadurch gekennzeichnet, daß die Mittelachsen (6m) der Innenlöcher (6) mit den Mittelachsen (3m) der die Rollen (5) tragenden Außenflächen der Lagerkragen (3) zusammenfallen (Fig. 3, 6).

3. Rollenkette nach Anspruch 1, dadurch gekennzeichnet, daß die Mittelachsen (4m) der Bolzen (4) im gestreckten Kettenzustand mit den Mittelachsen (3m) der die Rollen (5) tragenden Außenflächen der Lagerkragen (3) zusammenfallen (Fig. 7).

4. Rollenkette nach einem der Ansprüche 1 bis 3, dadurch gekennzeichnet, daß die Innenlöcher (6) der Lagerkragen (3) in den jeweils zu den benachbarten Außenlaschen (2) gerichteten Hälften so gestaltet sind, daß sie die Bolzen (6) hier teilweise formschlüssig umfassen (Fig. 6).

5. Rollenkette nach einem der Ansprüche 1 bis 4, dadurch gekennzeichnet, daß die Außenlaschen (2a, 2b) oberhalb und unterhalb der Bolzenlöcher (10) mit Anschlagnasen (7c) für die Innenlaschen (1) versehen sind (Fig. 5).

6. Rollenkette nach einem der Ansprüche 1 bis 4, dadurch gekennzeichnet, daß die Außenflächen der die Rollen (5) tragenden Lagerkragen (3) so aus vier über je 90° erstreckten Zylinderflächensegmenten(3b, 3c, 3d, 3e) gebildet sind, daß ihre Schnittflächen senkrecht zu den Mittelachsen (3m) der Lagerkragen (3) eine Außenkontur in Form eines Quadrats mit konvexen Seitenlinien besitzen, und daß dabei die Lagerkragen (3) so an den Innenlaschen (1) angeordnet sind, daß je zwei Zylinderflächensegmente (3b, 3c) auf einer Seite und die beiden anderen Zylinderflächensegmente (3d, 3e) auf der anderen Seite einer die Mittelachsen (3m) der Lagerkragen (3) einschlieffenden Mittelebene liegen (Fig. 8).

7. Rollenkette nach einem der Ansprüche 1 bis 5, dadurch gekennzeichnet, daß die Auffenflächen der die Rollen (5) tragenden Lagerkragen (3) so aus drei über je 120° erstreckten Zylinderflächensegmenten (3f, 3g, 3h) gebildet sind, daß ihre Schnittflächen senkrecht zu den Mittelachsen (3m) der Lagerkragen (3) eine Außenkontur in Form eines gleichseitigen Dreiecks mit konvexen Seitenlinien besitzen, und daß dabei die Lagerkragen (3) so an den Innenlaschen (1) angeordnet sind, daß je eines der Zylinderflächensegmente (3f) zur Mitte der Innenlasche (1) hin gerichtet ist und von einer die Mittelachsen (3m) der Lagerkragen (3) enthaltenden Mittelebene halbiert wird, während die Berührungsfläche der anderen beiden Außenflächensegmente (3g, 3h) diese Achse (A) enthalten (Fig. 9, 10).

8. Rollenkette nach Anspruch 7, dadurch gekennzeichnet, daß die Innenflächen der die Bolzen (4) aufnehmenden Lagerkragen (3) so aus drei über knapp je 120° erstreckten Innenflächensegmenten (6a) und diese tangential verbindenden, ebenen oder konvexen Flächenabschnitten (6b) gebildet sind, daß ihre Schnittfläche senkrecht zu den Mittenachsen (3m) der Lagerkragen (3) eine Außenkontur von drei von der Mittelachschse (3m) radial auseinandergezogenen, über je 120° erstreckten Kreisbogensegmenten besitzen, die an ihren äußeren Eckpunkten durch gerade oder konvexe Linien verbunden sind, und daß die Innenflächensegmente (6a) und Flächenabschnitte (6b) so an den Innenlaschen (1) angeordnet sind, daß je eines der Zylinderflächensegmente (6a) zum benachbarten Außenglied (2) hin gerichtet ist und von einer die Mittenachsen (3m) der Lagerkragen (3) enthaltenden Mittelebene halbiert wird, die gleichzeitig den die anderen beiden Zylinderflächensegmente (6a) verbindenden Flächenabschnitt (6b) halbiert (Fig. 10).

## Claims

1. Roller chain for bicycles with chain wheel changing gear (derailleur) with alternately arranged inner and outer links connected with another in an articulated manner, wherein the outer links comprise a pair of outer plates (2) which are connected with one another by means of two pins (4) and the inner links comprise a pair of inner plates (1) being arranged between the outer plates (2) and rotatably supported on the pins (4), wherein two bearing collars (3) are attached to each of the inner plates (1), said bearing collars (3) carrying rollers (5) and having inner holes (6) surrounding said pins (4), characterized in that the inner holes (6) have an oval or oblong cross section in the longitudinal direction of the chain, and in that the roller pitch of the inner and outer links in the stretched state of the chain is adjusted substantially to the same value by means of a corresponding offsetting of the pin holes (10) in the outer plates (2) and/or of the inner holes (6) in the bearing collars (3) (Figs. 3, 8, 9).

2. Roller chain according to claim 1, characterized in that the center axes (6m) of the inner holes (6) coincide with the center axes (3m) of the outer surfaces of the bearing collars (3) carrying the rollers (5) (Figs. 3, 6).

3. Roller chain according to claim 1, characterized in that the center axes (4m) of the pins (4) coincide in stretched state of the chain with the center axes (3m) of the outer surfaces of the bearing collars (3) carrying the rollers (5) (Fig. 7).

4. Roller chain according to one of claims 1 to 3, characterized in that the inner holes (6) of the bearing collars (3) are designed in the halves directed toward the adjecent outer plates (2) in such a way that they surround the pins (6) in this location in a partially positive-locking manner (Fig. 6).

5. Roller chain according to one of claims 1 to 4, characterized in that the outer plates (2a,2b) are provided above and below the pin holes (10) with stop projections (7c) for the inner plates (1) (Fig. 5).

6. Roller chain according to one of claims 1 to 4, characterized in that the outer surfaces of the bearing collars (3) carrying the rollers (5) are formed from four cylinder surface segments (3b,3c,3d,3e), each extending along 90°, in such a way that their section planes perpendicular to the center axes (3m) of the bearing collars (3) have an outer contour in the shape of a square with convex side lines, and in that the bearing collars (3) are arranged on the inner plates (1) in such a way that two cylinder surface segments (3b,3c) lie on one side and the two other cylinder surface segments (3d,3e) lie on the other side, respectively, of a center plane including the center axes (3m) of the bearing collars (3) (Fig. 8).

7. Roller chain according to one of claims 1 to 5, characterized in that the outer surfaces of the bearing collars (3) carrying the rollers (5) are formed from three cylinder surface segments (3f,3g,3h), each extending over 120°, in such a way that their section planes perpendicular to the center axes (3m) of the bearing collars (3) have an outer contour in the shape of an equilateral triangle with convex side lines, and in that the bearing collars (3) are arranged on the inner plates (1) in such a way that one of the cylinder surface segments (3f) is directed toward the center of the inner plate (1) and is bisected by a center plane containing the center axes (3m) of the bearing collars (3), while the contact surface of the other two outer surface segments (3g,3h) contain this axis (A) (Figs. 9,10).

8. Roller chain according to claim 7, characterized in that the inner surfaces of the bearing collars (3) receiving the pins (4) are formed from three inner surface segments (6a), each extending along barely 120°, and from planar or convex surface portions (6b) connecting the latter tangentially, in such a way that their section planes perpendicular to the center axes (3m) of the bearing collars (3) have an outer contour of three circular arc segments which are spread apart radially from the center axes (3m), extend along 120° in each instance and are connected at their outer comer points by straight or convex lines, and in that the inner surface segments (6a) and the surface portions (6b) are arranged on the inner plates (1) in such a way that one of the cylinder surface segments (6a) is directed toward the adjacent outer link (2) and is bisected by a center plane which contains the center axes (3m) of the bearing collars (3) and simultaneously bisects the surface portion (6b) connecting the other two cylinder surface segments (6a) (Fig. 10).

## Revendications

1. Chaîne à rouleaux pour bicyclettes avec changement de vitesses à roues dentées (dérailleur de bicyclette), comprenant en alternance des éléments intérieurs et extérieurs articulés les uns avec les autres, les éléments extérieurs étant constitués de respectivement une paire de maillons extérieurs (2) reliés entre eux par deux boulons (4) et les éléments intérieurs étant constitués de respectivement une paire de maillons intérieurs (1) disposés entre les maillons extérieurs (2) et montés de manière tournante sur les boulons (4), sur chacun des maillons intérieurs (1) étant prévu deux collets de support (1) avec des perçages intérieurs (6) qui enveloppent les boulons (4) et portent à chaque fois un rouleau (5), **caractérisé en ce** que les perçage intérieurs (6) présentent, dans la direction longitudinale de la chaîne, une section transversale ovale ou en forme de trou oblong, et que, à l'état tendu de la chaîne, l'écartement des rouleaux des éléments intérieurs et extérieurs est réglé sensiblement sur la même valeur par un décalage correspondant des trous de boulon (10) dans les maillons extérieurs (2) et/ ou des trous intérieurs (6) dans les collets de support (3) (fig. 3, 8, 9).

2. Chaîne à rouleaux selon la revendication 1, caractérisée en ce que les axes (6m) des trous intérieurs (6) coïncident avec les axes (3m) des surfaces extérieures des collets de support (3) qui portent les rouleaux (5) (fig. 3, 6).

3. Chaîne à rouleaux selon la revendication 1, caractérisée en ce que, à l'état tendu de la chaîne, les axes (4m) des boulons (4) coïncident avec les axes (3m) des surfaces extérieures des collets de support (3) qui portent les rouleaux (5) (fig. 7).

4. Chaîne à rouleaux selon l'une des revendications 1 à 3, caractérisée que les moitiés des trous intérieurs (6) des collets de support (3) respectivement tournées vers les maillons extérieurs (2) voisins sont conformées je telle façon qu'elles enveloppent ici partiellement les boulons (6) à engagement positif (fig. 6).

5. Chaîne à rouleaux selon l'une des revendications 1 à 4, caractérisée en ce que les maillons extérieurs (2a, 2b) comportent au-dessus et en dessous des trous de boulon (10) des cames de butée (7c) pour les maillons intérieurs (1) (fig. 5).

6. Chaîne à rouleau selon l'une des revendications 1 à 4, caractérisée en ce que les surfaces extérieures des collets de support (3) portant les rouleaux (5) sont constituées par quatre segments de surface cylindrique (3b, 3c, 3d, 3e) s'étendant chacun sur 90° de manière que leurs plans de section perpendiculaires aux axes (3m) des collets de support (3) présentent un contour extérieur en forme de carré avec des lignes latérales convexes, et que les collets de support (3) sont alors prévus sur les maillons intérieurs (1) de telle façon que respectivement deux segments de surface cylindrique (3b, 3c) se situent d'un côté, et les deux autres segments de surface cylindrique (3d, 3e) de l'autre côté d'un plan médian dans lequel se situent les axes (3m) des collets de support (3) (fig. 8).

7. Chaîne à rouleau selon l'une des revendications 1 à 5, caractérisée en ce que les surfaces extérieures des collets de support (3) portant les rouleaux (5) sont constituées par trois segments de surface cylindrique (3f, 3g, 3h) s'étendant chacun sur 120° de manière que leurs plans de section perpendiculaires aux axes (3m) des collets de support (3) présentent un contour extérieur sous la forme d'un triangle équilatéral avec des lignes latérales convexes, et que les collets de support (3) sont alors prévus sur les maillons intérieurs (1) de telle façon que respectivement un des segments de surface cylindrique (3f) est tourné vers le centre du maillon intérieur (1) et partagé en deux par un plan médian contenant les axes (3m) des collets de support (3), tandis que la surface de contact des deux autres segments de surface extérieure (3g, 3h) comprend cet axe (A) (fig. 9, 10).

8. Chaîne à rouleaux selon la revendication 7, caractérisée en ce que les surfaces intérieures des collets de support (3) recevant les boulons (4) sont constituées par trois segments de surface intérieure (6a) s'étendant chacun sur presque 120° et par des sections de surface (6b) planes ou convexe reliant ceux-ci de manière tangentielle, de telle façon que leur plan de section perpendiculaire aux axes (3m) des collets de support (3) présente un contour extérieur de trois segments en arc de cercle qui partent radialement de l'axe (3m), s'étendent sur respectivement 120° et sont reliés dans leurs angles extérieurs par des lignes droites ou convexes, et que les segments de surface intérieure (6a) et sections de surface (6b) sont prévus sur les maillons intérieurs (1) de telle façon que respectivement l'un des segments de surface cylindrique (6a) est tourné vers l'élément extérieur (2) voisin et divisé en deux par un plan médian contenant les axes (3m) des collets de support (3), lequel divise simultanément par moitiés la section de surface (6b) qui relie les deux autres segments de surface cylindrique (6a) (fig. 10).
